# EUROPÄISCHE PATENTSCHRIFT

(11) **EP 3 730 225 B1**
(45) Veröffentlichungstag und Bekanntmachung des Hinweises auf die Patenterteilung: **20.09.2023**
(21) Anmeldenummer: 19171338.7
(22) Anmeldetag: 26.04.2019
(51) Int. Cl.: B07B 1/40, B07B 13/05, B07B 1/46, B07B 13/16

(54) **ENTSTAUBUNGSANLAGE**
DUST REMOVAL SYSTEM
INSTALLATION DE DÉPOUSSIÉRAGE

(43) Veröffentlichungstag der Anmeldung: 28.10.2020
(73) Patentinhaber: Kraemer, Thilo, 64291 Darmstadt (DE)
(72) Erfinder: Kraemer, Thilo, 64291 Darmstadt (DE)
(74) Vertreter: Hamel, Armin

(56) Entgegenhaltungen:
- WO-A1-2008/032363
- DE-A1-102008 038 645
- DE-U1-202014 103 239
- GB-A- 1 579 719
- US-A1- 2008 128 002

## Beschreibung

Die Erfindung betrifft eine Anordnung aufweisend ein Testgerät für kleinvolumige Schüttgüter und eine Entstaubungsanlage.

### Einschlägiger Stand der Technik:

DE102008038645 A1 offenbart einen Grobgutseparator zum Trennen von Grobgut aus einem Schüttgut mittels wenigstens eines Siebes.

US2008128002 A1 betrifft den Bereich der Verpackung von Pulvern in Kapseln. Es offenbart eine Vorrichtung und ein Verfahren zum Entfernen und Sammeln von überschüssigem Pulver und Staub von der Außenseite der Kapsel.

Mit einem Testgerät für kleinvolumige Schüttgüter werden pharmazeutische Schüttgüter, wie beispielsweise Tabletten, Körner oder Oblongs, vermessen. Neben der Masse der Schüttgüter können auch deren Länge, Breite, chemische Zusammensetzung, Qualität sowie Härte ermittelt werden. Dabei können Staub oder Bruchstücke von diesen Schüttgütern die Messungen verfälschen.

Aufgabe der vorliegenden Erfindung ist es daher, Schüttgüter frei von Staub zu bekommen, um so ein Eindringen von Staub oder Bruchstücken von Schüttgütern in das Testgerät zu verhindern.

Diese Aufgabe wird durch die Merkmale des Patentanspruchs 1 gelöst.

Die Erfindung betrifft damit eine Anordnung nach Anspruch 1, aufweisend ein Testgerät für kleinvolumige Schüttgüter und eine Entstaubungsanlage, wobei die Entstaubungsanlage auf dem Testgerät befestigt ist und wobei die Entstaubungsanlage aufweist:
- einen Boden, der in einem ersten Abschnitt mehrere Öffnungen aufweist,
   die eine Siebfunktion besitzen, wobei Staub über diese Öffnungen aus der Entstaubungsanlage entfernbar ist und wobei die Schüttgüter auf dem Boden liegen bleiben, wobei der Boden einen zweiten Abschnitt aufweist, in dem eine Ausschleusöffnung vorgesehen ist, über die die Schüttgüter aus der Entstaubungsanlage entfernbar und dem Testgerät zuführbar sind;
- einen Aufsatz, der bewegbar über dem Boden angeordnet ist, wobei der Aufsatz eine Kammer aufweist, die nach unten hin offen ist, so dass ein Teil des Bodens den Boden der Kammer bildet, wobei die Kammer eine Beschickungsöffnung aufweist, über die die Schüttgüter in die Kammer einbringbar sind, wobei in einer ersten Stellung die Kammer des Aufsatzes oberhalb der mehreren Öffnungen mit Siebfunktion angeordnet ist, und wobei in einer zweiten Stellung die Kammer des Aufsatzes oberhalb der Ausschleusöffnung angeordnet ist.

Vorteilhaft bei dieser Erfindung ist, dass die Entstaubungsanlage sehr kompakt aufgebaut ist. Mit der Entstaubungsanlage ist es möglich, in kürzester Zeit Staub oder andere unerwünschte Fremdkörper, wie zum Beispiel Bruchstücke von Schüttgütern, zu entfernen. Im Folgenden werden diese Fremdkörper sowie Staub lediglich als Staub bezeichnet. Von Vorteil ist ferner, dass der Boden der Entstaubungsanlage leicht austauschbar ist. Dadurch ist es möglich, Staub von Schüttgütern unterschiedlichen Typs zu entfernen, weil Böden bereitgestellt werden können, deren Öffnungen mit Siebfunktion im ersten Abschnitt unterschiedliche Durchmesser und Formen aufweisen. Vorteilhafterweise kann der Boden auch mittels eines Vibrationsantriebs in Vibration versetzt werden, wodurch Staub schnell und effektiv über die Öffnungen mit Siebfunktion entfernt werden kann. Diese Entstaubungsanlage kann einfach auf ein Testgerät gesetzt werden, wobei nach Entstaubung des Schüttguts das Schüttgut einfach über die Ausschleusöffnung in das Testgerät eingebracht werden kann. Die Entstaubungsanlage ist dabei derart ausgebildet, dass auch ein pneumatischer Förderer, zum Beispiel ein Zyklon, einfach an die Beschickungsöffnung angeschlossen werden kann. Dadurch ist es möglich, dass die Schüttgüter nicht nur einfach per Hand, sondern auch über einen pneumatischen Förderer in die Entstaubungsanlage angebracht werden können.

In einer ersten Stellung ist die Kammer des Aufsatzes oberhalb der mehreren Öffnungen mit Siebfunktion angeordnet. In dieser Position kann Schüttgut über die Beschickungsöffnung in die Kammer eingebracht werden. Der Staub fällt dann durch die mehreren Öffnungen mit Siebfunktion. Unterhalb dieser Öffnungen kann ein Auffangbehälter angeordnet sein, in den der Staub fällt und so aufgefangen wird.

In einer zweiten Stellung ist die

Kammer des Aufsatzes oberhalb der Ausschleusöffnung angeordnet. Die vom Staub befreiten Schüttgüter können damit über die Ausschleusöffnung die Kammer verlassen. Ist unterhalb der Entstaubungsanlage ein Testgerät für kleinvolumige Schüttgüter angeordnet, so fallen die Schüttgüter in das Testgerät, in dem sie dann vermessen werden können.

Bevorzugt ist ein Vibrationsantrieb vorgesehen, mit dem der Boden in Vibration versetzt werden kann. Dadurch wird der Staub schnell und effektiv über die Öffnungen mit Siebfunktion und damit aus der Kammer entfernt. In einer weiteren Ausführungsform kann der Aufsatz als Drehteller ausgebildet sein. Über einen Antrieb kann so der Aufsatz von der ersten Stellung in die zweite Stellung und wieder zurückbewegt werden. Diese Ausführungsform ist sehr robust und garantiert einen schnellen Transport des Schüttguts von dem ersten Abschnitt des Bodens zum zweiten Abschnitt des Bodens.

In einer alternativen Ausführungsform kann ein Antrieb vorgesehen sein, mit dem der Aufsatz, vorzugsweise über ein Schienensystem, oberhalb des Bodens von der ersten Stellung in die zweite Stellung und wieder zurück verfahrbar ist. In diesem Fall kann der Aufsatz beispielsweise kastenförmig aufgebaut sein. Auch diese Variante ist robust und garantiert einen schnellen Transport des Schüttguts von dem ersten Abschnitt des Bodens zum zweiten Abschnitt des Bodens.

Die Erfindung betrifft auch ein Verfahren nach Anspruch 5 zum Entfernen von Staub von kleinvolumigen Schüttgütern mittels der Anordnung. Das Verfahren umfasst dabei folgende aufeinanderfolgende Schritte:
In einem ersten Schritt wird der Aufsatz durch Drehung in die erste Stellung gebracht.

In einem zweiten Schritt wird Schüttgut über die Beschickungsöffnung in die Kammer des Aufsatzes eingebracht. Das Schüttgut gelangt so auf den ersten Abschnitt des Bodens, wobei der Staub durch die Öffnungen mit Siebfunktion fällt. Das auf dem Boden verbleibende Schüttgut ist somit staubfrei.

In einem dritten Schritt wird die Kammer des Aufsatzes durch Drehung in die zweite Stellung gebracht, so dass die Kammer oberhalb der Ausschleusöffnung angeordnet ist. Über diese Ausschleusöffnung kann das Schüttgut die Kammer verlassen. Ist unterhalb der Ausschleusöffnung das Testgerät angeordnet, so fällt das Schüttgut in das Testgerät, in dem das Schüttgut dann vermessen werden kann.

Bevorzugt wird der Boden während des zweiten Schritts durch den Vibrationsantrieb in Vibration versetzt. Dadurch wird gewährleistet, dass der Staub schnell und vollständig vom Schüttgut getrennt wird.

Schließlich betrifft die Erfindung noch eine Anordnung, umfassend die Entstaubungsanlage sowie das Testgerät für die Schüttgüter, die in der Entstaubungsanlage von Staub befreit wurden. Die Entstaubungsanlage kann dabei auf dem Testgerät angebracht sein. Da an den zu vermessenden Schüttgütern kein Staub mehr anhaftet, können fehlerfreie Messergebnisse erhalten werden.

Es versteht sich, dass die verschiedenen Ausgestaltungen der Erfindung in technologisch sinnvoller Weise miteinander kombiniert werden können.

Bevorzugte Ausführungsformen der Erfindung werden beispielhaft anhand von Zeichnungen erläutert. Die Figuren der Zeichnungen zeigen im Einzelnen:
- Figur 1: eine perspektivische Ansicht einer Anordnung umfassend eine Entstaubungsanlage und ein Testgerät;
- Figur 2: eine weitere Ansicht der Anordnung nach Figur 1;
- Figur 3: eine erste Ansicht der in Figur 1 dargestellten Entstaubungsanlage ohne Testgerät;
- Figur 4: eine zweite Ansicht der in Figur 3 dargestellten Entstaubungsanlage;
- Figur 5: ein Schnitt durch eine Variante einer Entstaubungsanlage;
- Figur 6: eine erste Draufsicht auf die in Figur 5 gezeigte Entstaubungsanlage und
- Figur 7: eine zweite Draufsicht auf die in Figur 5 gezeigte Entstaubungsanlage.

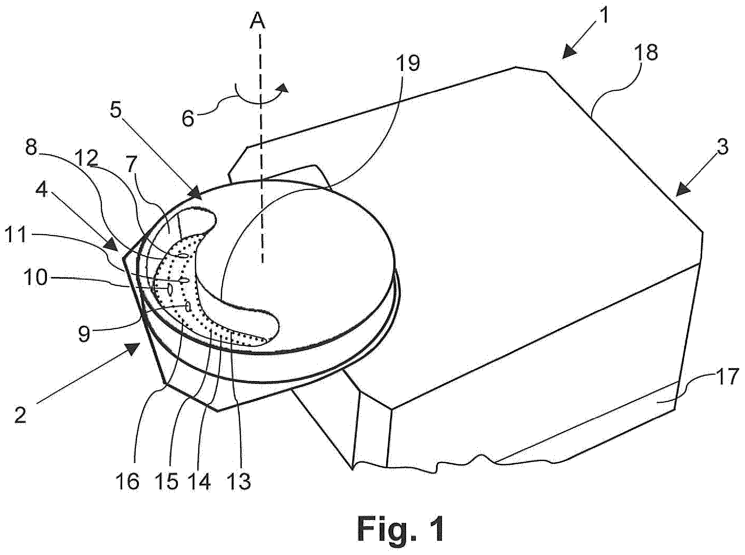

In Figur 1 ist eine perspektivische Ansicht einer Anordnung 1 gezeigt, die eine Entstaubungsanlage 2 und ein Testgerät 3 für kleinvolumige Schüttgüter umfasst. Die Entstaubungsanlage 2 ist auf dem Testgerät 3 befestigt. Mit dem Testgerät 3 werden beispielsweise die Masse, die Länge, die Breite, die chemische Zusammensetzung, die Qualität sowie die Härte der kleinvolumigen Schüttgüter vermessen, nachdem diese in der Entstaubungsanlage 2 von Staub befreit wurden. Diese Schüttgüter sind vorzugsweise pharmazeutische Produkte und können beispielsweise als Tabletten, Körner oder Oblongs vorliegen.

Das Testgerät 3 besitzt einen unteren Bereich 17, auf dem eine Abdeckung 18 sitzt. Da die Abdeckung 18 durchsichtig ist, sind einzelne Bauteile des Testgeräts 3 zumindest teilweise zu sehen. Allerdings werden diese Bauteile der Übersicht halber nicht näher beschrieben, zumal der Aufbau von Testgeräten für kleinvolumige Schüttgüter einem Fachmann bekannt ist.

Die Entstaubungsanlage 2 umfasst einen Boden 4, auf dem ein beweglicher Aufsatz 5 angeordnet ist. Der Aufsatz 5 ist in Figur 1 als Drehteller ausgebildet und kann mittels eines Antriebs um eine Achse A gedreht werden (siehe Richtungspfeil 6). Der Antrieb ist nicht zu sehen, weil dieser unterhalb des Bodens 4 angebracht ist. Mit dem Antrieb wird nur der Aufsatz 5 gedreht; der Boden 4 wird nicht mitbewegt.

Der Aufsatz 5 weist eine Kammer 7 auf, die nach unten hin offen ist, so dass ein erster Abschnitt 8 des Bodens 4 zu sehen ist. Auf diesem Abschnitt 8 liegen mehrere Schüttgüter 9 bis 12. Der Boden 4 weist in diesem Abschnitt mehrere Öffnungen auf, von denen nur einige mit den Bezugszahlen 13 bis 16 versehen sind. Diese Öffnungen 13 bis 16 haben eine bestimmte Form und einen definierten Durchmesser und besitzen eine Siebfunktion. Die Öffnungen 13 bis 16 bilden somit ein Sieb. Dadurch fällt nur Staub durch die Öffnungen 13 bis 16, wohingegen die Schüttgüter 9 bis 12 auf dem Boden 4 liegen bleiben. Die Anordnung der Öffnungen 13 bis 16 ist nur schematisch dargestellt.

Von Vorteil ist, dass der Boden 4 leicht ausgetauscht werden kann. Dadurch ist es möglich, Staub von Schüttgütern unterschiedlichen Typs zu entfernen, weil Böden bereitgestellt werden können, deren Öffnungen mit Siebfunktion im ersten Abschnitt 8 des Bodens 4 unterschiedliche Durchmesser und Formen aufweisen können.

Damit der Staub schnell und effektiv entfernt werden kann, weist die Entstaubungsanlage 2 einen Vibrationsantrieb auf, mit dem der Boden 4 in Vibration versetzt werden kann. Auch der Vibrationsantrieb ist unterhalb des Bodens 4 angebracht, weshalb der Vibrationsantrieb nicht zu sehen ist.

Der Aufsatz 5 ist im ersten Abschnitt 8 der Kammer 7 nach oben hin ebenfalls offen. Es wird somit eine obere Öffnung 19 gebildet, die als Beschickungsöffnung 19 dient, über die die kleinvolumigen Schüttgüter 9 bis 12 in die Kammer 7 des Aufsatz 5 eingebracht werden können.

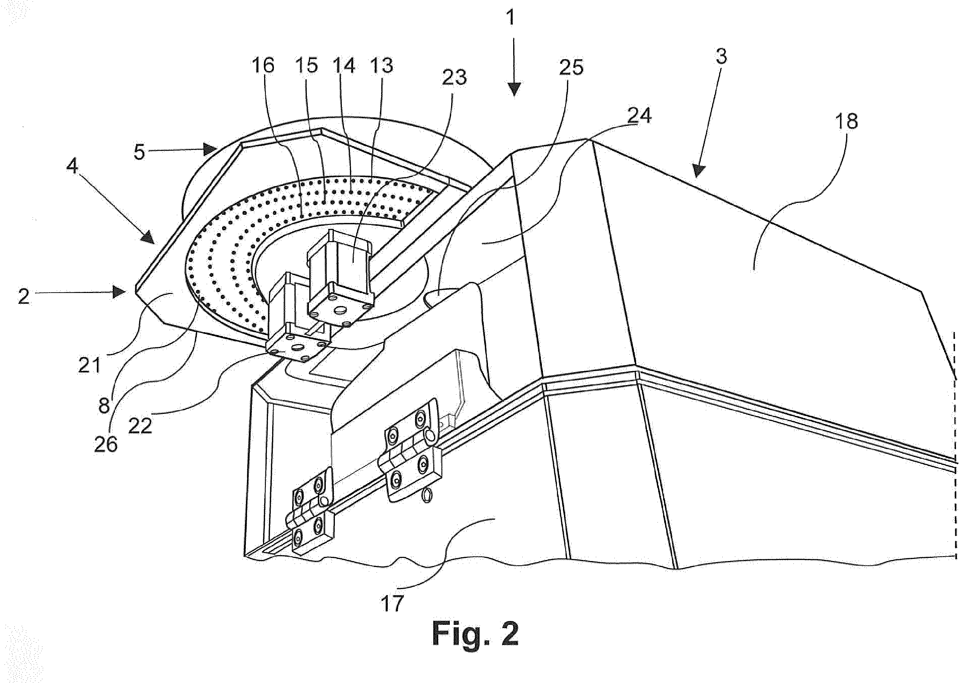

In Figur 2 ist eine weitere Ansicht der Anordnung 1 nach Figur 1 dargestellt, wobei auf eine Unterseite 26 der Entstaubungsanlage 2 geblickt wird. An der Abdeckung 18 des Testgeräts 3 ist die Entstaubungsanlage 2 befestigt. Dabei ist eine Unterseite 21 des Bodens 4 zu erkennen, an dem der Antrieb 22 für die Drehung des Aufsatzes 5 sowie der Vibrationsantrieb 23 angeordnet sind. Der Boden 4 weist die Öffnungen 13 bis 16 im ersten Abschnitt 8 auf, über die Staub aus der Entstaubungsanlage 2 entfernt werden kann. Diese Öffnungen 13 bis 16 bilden ein Sieb. Unterhalb des ersten Abschnitts 8 des Bodens 4 kann ein Auffangbehälter angebracht sein, der den Staub auffängt, der jedoch der Übersicht halber in Figur 2 nicht gezeigt ist. Dieser Auffangbehälter kann leicht von der Entstaubungsanlage 2 entfernt oder wieder an diese Entstaubungsanlage 2 angebracht werden, so dass der Auffangbehälter bei Bedarf schnell entleert oder ausgewechselt werden kann.

Ein zweiter Abschnitt 24 des Bodens 4 weist eine Ausschleusöffnung 25 auf, über die die Schüttgüter in das Testgerät 3 gelangen können, um dort vermessen zu werden.

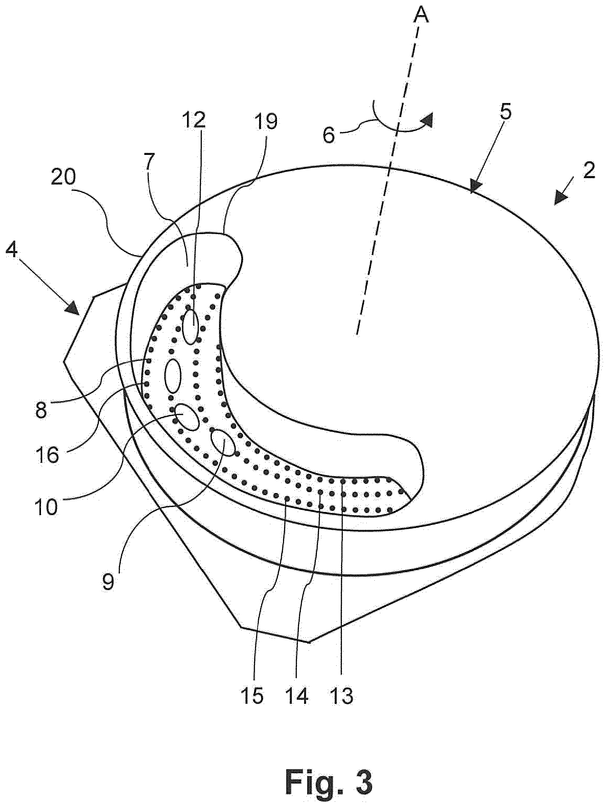

Figur 3 zeigt eine erste Ansicht der in Figur 1 dargestellten Entstaubungsanlage 2 ohne Testgerät. Oberhalb des Bodens 4 ist der um die Achse A drehbare Aufsatz 5 angeordnet. Der Aufsatz 5 besitzt eine Kammer 7, die nach oben und unten hin offen ist, wodurch der erste Abschnitt 8 des Bodens 4 zu sehen ist. Seitlich ist die Kammer 7 von einer Wandung 20 umgeben, so dass die Schüttgüter 9 bis 12 nicht aus der Kammer 7 fallen können.

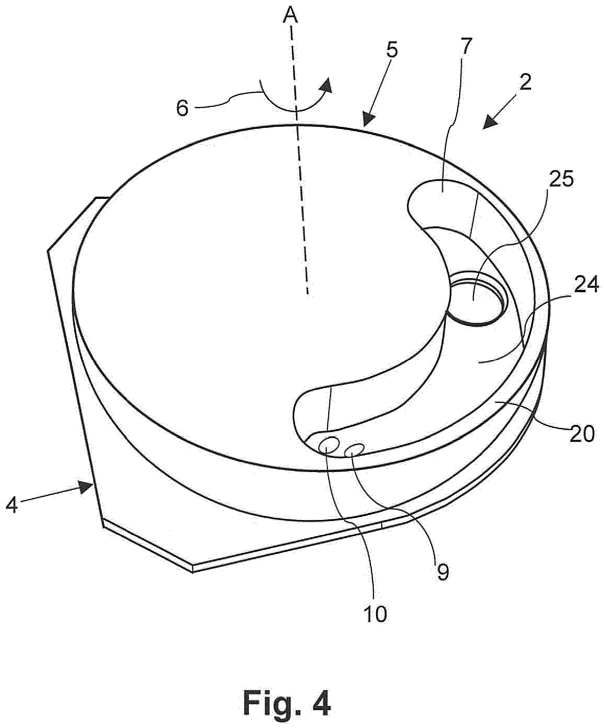

Nachdem die Schüttgüter 9 bis 12 von Staub befreit wurden, wird der Aufsatz 5 in Richtung des Pfeils 6 um die Achse A gedreht, so dass die Kammer 7 den zweiten Abschnitt 24 des Bodens 4 erreicht (siehe Figur 4). Dabei werden die Schüttgüter, von denen nur die Schüttgüter 9 und 10 zu sehen sind, in Richtung der Ausschleusöffnung 25 bewegt. Erreichen die Schüttgüter die Ausschleusöffnung 25, so fallen sie in das darunter liegende Testgerät, das allerdings in Figur 3 nicht dargestellt ist. In diesem Testgerät werden die Schüttgüter mittels einer Vereinzelungsvorrichtung (nicht gezeigt) vereinzelt, so dass die Schüttgüter nacheinander vermessen werden können.

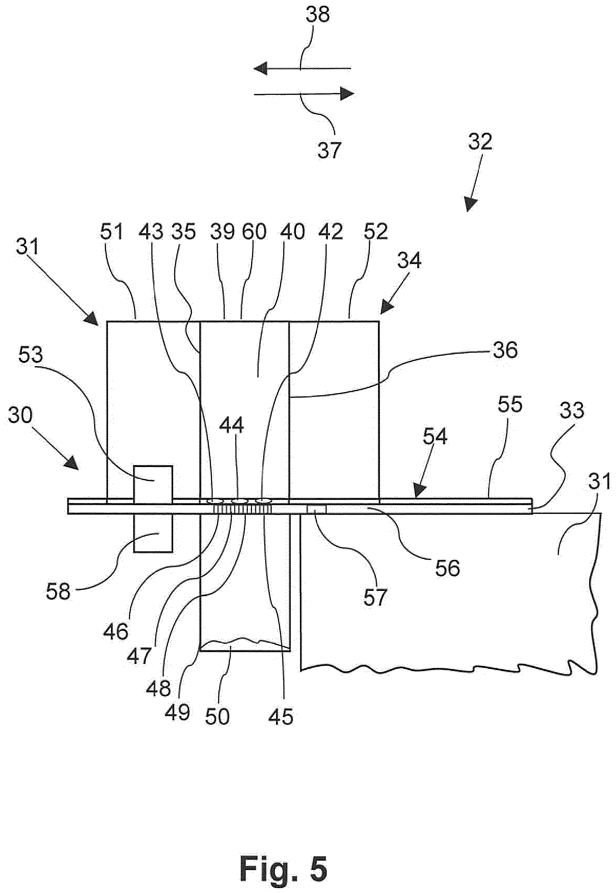

Figur 5 zeigt einen Schnitt durch eine Variante einer Entstaubungsanlage 30, die auf einem nur ausschnittsweise dargestellten Testgerät 31 angeordnet ist. Testgerät 31 und Entstaubungsanlage 30 bilden wiederum eine Anordnung 32.

Die Entstaubungsanlage 30 umfasst einen Boden 33, auf dem ein Aufsatz 34 bewegbar angebracht ist.

Der Aufsatz 31 besitzt in einem mittleren Bereich 39 eine Kammer 40. Die Kammer 40 ist, wie auch die Kammer 7 der Entstaubungsanlage 2, nach oben hin sowie nach unten hin offen. Dadurch besitzt die Kammer 40 ebenfalls eine Beschickungsöffnung 60, über die Schüttgut in die Kammer 40 eingebracht werden kann. Die Kammer 40 ist durch zwei Trennwände 35 bzw. 36 von einem hinteren Bereich 51 sowie von einem vorderen Bereich 52 des Aufsatzes 31 getrennt. In der Kammer 40 befindet sich bereits Schüttgut, das auf einem ersten Abschnitt 45 des Bodens 33 liegt, weil die Kammer 40 nach unten hin offen ausgebildet ist. Von dem Schüttgut, ist nur das Schüttgut 42, 43, 44 zu sehen. Der erste Abschnitt 45 des Bodens 33 weist mehrere Öffnungen 46, 47, 48 mit Siebfunktion auf, so dass Staub über diese Öffnungen 46, 47, 48 in einen darunter angebrachten Auffangbehälter 49 fallen kann. Auch diese Öffnungen 46, 47, 48 bilden ein Sieb. Wie in Figur 5 zu sehen, befindet sich in einem Auffangbehälter 49 bereits Staub 50.

In dem hinteren Bereich 51 des Aufsatzes 31 ist ein Antrieb 53 vorgesehen, mittels dem der Aufsatz 34 auf einem Schienensystem 54, zum Beispiel bestehend aus zwei parallel zueinander angeordneten Schienen, in Längsrichtung bewegt werden kann, was durch die Pfeile 37, 38 angedeutet ist. In Figur 5 ist aufgrund des Schnitts durch die Anordnung 32 nur die hintere Schiene 55 zu sehen.

In einem zweiten Abschnitt 56 des Bodens 33 ist eine Ausschleusöffnung 57 vorgesehen, über die das Schüttgut 42, 43, 44 in das Testgerät 31 gelangen kann. Dazu muss das Schüttgut 42, 43, 44 nur durch Bewegung des Aufsatzes 31 in Richtung des Pfeils 37 und damit zur Ausschleusöffnung 57 geschoben werden.

Vorzugsweise ist unterhalb des Bodens 33 zusätzlich ein Vibrationsantrieb 58 vorgesehen, mit dem der Boden 33 in Vibration versetzt werden kann, um das Schüttgut 42, 43, 44 noch schneller von Staub 50 zu befreien.

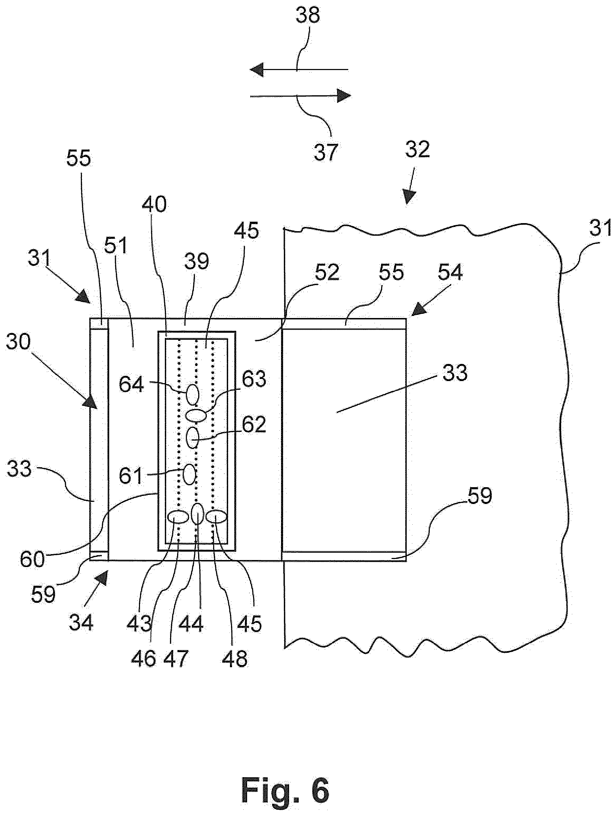

In Figur 6 ist eine Draufsicht auf die Anordnung 32 nach Figur 5 bestehend aus der Entstaubungsanlage 30 und dem Testgerät 31 gezeigt. Auf dem Schienensystem 54, umfassend zwei parallel zueinander angeordnete Schienen 55, 59, ist der verfahrbare Aufsatz 34 angeordnet. Der Aufsatz 34 besteht aus drei Bereichen 39, 51, 52, wobei im mittleren Bereich 39 die Kammer 40 untergebracht ist. Die Kammer 40 besitzt eine Beschickungsöffnung 60, über die Schüttgut 42, 43, 44, 61, 62, 63, 64 in die Kammer 40 eingebracht werden kann. Dieses Schüttgut 42, 43, 44, 61, 62, 63, 64 liegt auf dem ersten Abschnitt 45 des Bodens 33, in dem sich die Öffnungen 46, 47, 48 mit Siebfunktion befinden, über die der Staub aus der Kammer 40 entfernt wird.

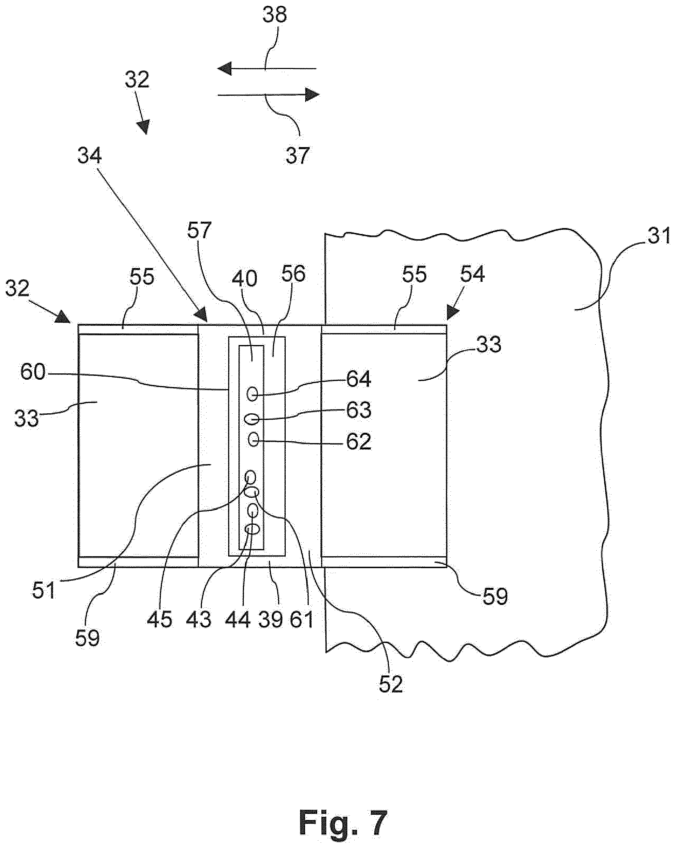

Nachdem das Schüttgut 42, 43, 44, 61, 62, 63, 64 von Staub befreit wurde, wird der Aufsatz 34 auf dem Schienensystem 54 in Richtung des Pfeils 37 bewegt, so dass die in Figur 7 gezeigte Position erreicht wird.

In Figur 7 wurde das Schüttgut 42, 43, 44, 61, 62, 63, 64 bereits in Richtung des zweiten Abschnitts 56 des Bodens 33 bewegt, wo sich die Ausschleusöffnung 57 befindet. Durch die Bewegung des Aufsatzes 34 auf dem Schienensystem 54 in Richtung des zweiten Abschnitts 56 des Bodens 33 wird das Schüttgut 42, 43, 44, 61, 62, 63, 64 somit zur Ausschleusöffnung 57 geschoben, durch die das Schüttgut 42, 43, 44, 61, 62, 63, 64 hindurchfällt und so in das Testgeräts 31 gelangt. In dem Testgerät 31 wird das Schüttgut 42, 43, 44, 61, 62, 63, 64 mittels einer Vereinzelungsvorrichtung (nicht zu sehen) vereinzelt, so dass das Schüttgut 42, 43, 44, 61, 62, 63, 64 nacheinander vermessen werden kann.

Dabei läuft das Verfahren zum Entfernen von Staub von Schüttgütern mittels der Entstaubungsanlage 2 bzw. 31 wie folgt ab.
In einem ersten Schritt wird der Aufsatz 34 bzw. 5 in die erste Stellung gebracht (Figur 1 bzw. Figur 6).

In einem zweiten Schritt wird Schüttgut über die Beschickungsöffnung in die Kammer des Aufsatzes eingebracht, wobei das Schüttgut auf den ersten Abschnitt des Bodens gelangt. Dabei fällt der Staub durch die Öffnungen des Bodens, während das Schüttgut auf dem Boden liegen bleibt. In einem dritten Schritt wird die Kammer des Aufsatzes in die zweite Stellung gebracht, so dass die Kammer oberhalb der Ausschleusöffnung angeordnet ist, wobei das Schüttgut über diese Ausschleusöffnung die Kammer verlässt und so in das Testgerät gelangt (Figur 4 bzw. Figur 7). Vorzugsweise wird der Boden während des zweiten Schritts mittels des Vibrationsantriebs in Vibration versetzt, um so den Staub noch effektiver vom Schüttgut zu entfernen.

### Bezugszeichenliste

- 1: Anordnung
- 2: Entstaubungsanlage
- 3: Testgerät
- 4: Boden
- 5: Aufsatz
- 6: Richtungspfeil
- 7: Kammer
- 8: Erster Abschnitt
- 9-12: Schüttgut
- 13-16: Öffnungen
- 17: Bereich
- 18: Abdeckung
- 19: Beschickungsöffnung
- 20: Wandung
- 21: Unterseite des Bodens 4
- 22: Antrieb
- 23: Vibrationsantrieb
- 24: Zweiter Abschnitt
- 25: Ausschleusöffnung
- 26: Unterseite der Entstaubungsanlage 2
- 27: ---
- 28: ---
- 29: ---
- 30: Entstaubungsanlage
- 31: Testgerät
- 32: Anordnung
- 33: Boden
- 34: Aufsatz
- 35,36: Trennwände
- 37,38: Pfeile
- 39: Bereich
- 40: Kammer
- 42-44: Schüttgut
- 45: Erster Abschnitt
- 46-48: Öffnungen
- 49: Auffangbehälter
- 50: Staub
- 51: Hinterer Bereich
- 52: Vorderer Bereich
- 53: Antrieb
- 54: Schienensystem
- 55: Schiene
- 56: Zweiter Abschnitt
- 57: Ausschleusöffnung
- 58: Vibrationsantrieb
- 59: Schiene
- 60: Beschickungsöffnung
- 61-64: Schüttgut

## Patentansprüche

1. Anordnung (1, 32) für ein Testgerät (3, 31) für kleinvolumige Schüttgüter (9 bis 12, 42 bis 44, 61 bis 64) und eine Entstaubungsanlage (2,30), wobei die Entstaubungsanlage (2, 30) auf dem Testgerät befestigt ist und wobei die Entstaubungsanlage (2,30) aufweist:
- einen Boden (4, 33), der in einem ersten Abschnitt (8, 45) mehrere Öffnungen (13 bis 16, 46 bis 48) aufweist, die eine Siebfunktion besitzen, wobei Staub (50) über diese Öffnungen (13 bis 16, 46 bis 48) aus der Entstaubungsanlage (2, 30) entfernbar ist und wobei die Schüttgüter (9 bis 12, 42 bis 44, 61 bis 64) auf dem Boden (4, 33) liegen bleiben, wobei der Boden (4, 33) einen zweiten Abschnitt (24, 56) aufweist, in dem eine Ausschleusöffnung (25, 57) vorgesehen ist, über die die Schüttgüter (9 bis 12, 42 bis 44, 61 bis 64) aus der Entstaubungsanlage (2, 30) entfernbar und dem Testgerät (3, 31) zuführbar sind
- einen Aufsatz (5, 34), der bewegbar über dem Boden (4, 33) angeordnet ist, wobei der Aufsatz (5, 34) eine Kammer (7, 40) aufweist, die nach unten hin offen ist, so dass ein Teil des Bodens (4, 33) den Boden der Kammer (7, 40) bildet und wobei die Kammer (7, 40) eine Beschickungsöffnung (19, 60) aufweist, über die die Schüttgüter (9 bis 12, 42 bis 44, 61 bis 64) in die Kammer (7, 40) einbringbar sind,
wobei in einer ersten Stellung die Kammer (7, 40) des Aufsatzes (5, 34) oberhalb der mehreren Öffnungen (13 bis 16, 46 bis 48) mit Siebfunktion angeordnet ist und
wobei in einer zweiten Stellung die Kammer (7, 40) des Aufsatzes (5, 34) oberhalb der Ausschleusöffnung (25, 57) angeordnet ist.

2. Anordnung nach Anspruch 1, **dadurch gekennzeichnet, dass** ein Vibrationsantrieb (23, 58) vorgesehen ist, mit dem der Boden (4, 33) in Vibration versetzbar ist.

3. Anordnung nach Anspruch 1, **dadurch gekennzeichnet, dass** der Aufsatz (5) als Drehteller ausgebildet ist und ein Antrieb (22) vorgesehen ist, mit dem der Aufsatz (5) von der ersten Stellung in die zweite Stellung bewegbar ist.

4. Anordnung nach Anspruch 1, **dadurch gekennzeichnet, dass** ein Antrieb (53) vorgesehen ist, mit dem der Aufsatz (34) oberhalb des Bodens (33) über ein Schienensystem (54) von der ersten Stellung in die zweite Stellung verfahrbar ist.

5. Verfahren zum Entfernen von Staub von kleinvolumigen Schüttgütern von der Anordnung nach den Ansprüchen 1 bis 4, **dadurch gekennzeichnet, dass** die Entstaubungsanlage der Anordnung folgende aufeinanderfolgende Schritte durchführt:
5.1 Der bewegliche Aufsatz wird durch Drehung in die erste Stellung gebracht
5.2 über die Beschickungsöffnung wird Schüttgut in die Kammer des beweglichen Aufsatzes eingebracht, wobei das Schüttgut auf den ersten Abschnitt des Bodens gelangt, wobei der Staub durch die Öffnungen des Bodens fällt
5.3die Kammer des beweglichen Aufsatzes wird durch Drehung des beweglichen Aufsatzes in die zweite Stellung gebracht, so dass die Kammer oberhalb der Ausschleusöffnung angeordnet ist, wobei das Schüttgut über diese Ausschleusöffnung die Entstaubungsanlage verlässt.

6. Verfahren nach Anspruch 5, **dadurch gekennzeichnet, dass** der Boden während des Schrittes 5.2 mittels des Vibrationsantriebs in Vibration versetzt wird.

## Claims

1. Arrangement (1, 32) for a test device (3, 31) for small-volume bulk materials (9 to 12, 42 to 44, 61 to 64) and a dedusting system (2, 30), wherein the dedusting system (2, 30) is mounted on the test apparatus, and wherein the dedusting system (2, 30) comprises:
- a bottom (4, 33) which in a first section (8, 45) has a plurality of openings (13 to 16, 46 to 48) having a screening function, wherein dust (50) can be extracted via these openings (13 to 16, 46 to 48) from the dedusting system (2, 30) and wherein the bulk materials (9 to 12, 42 to 44, 61 to 64) remain on the floor (4, 33), wherein the floor (4, 33) has a second section (24, 56) in which a discharge opening (25, 57) is provided, via which the bulk materials (9 to 12, 42 to 44, 61 to 64) can be removed from the dedusting system (2, 30) and fed to the test apparatus (3, 31),
- a top (5, 34) movably arranged above the bottom (4, 33), wherein the top (5, 34) has a chamber (7, 40) which is open downwardly, so that a part of the bottom (4, 33) forms the bottom of the chamber (7, 40), and wherein the chamber (7, 40) has a charging opening (19, 60) via which the bulk materials (9 to 12, 42 to 44, 61 to 64) can be introduced into the chamber (7, 40),
wherein in a first position, the chamber (7, 40) of the arrangement (5, 34) is arranged above the plurality of openings (13 to 16, 46 to 48) having a screening function, and
wherein in a second position, the chamber (7, 40) of the arrangement (5, 34) is arranged above the discharge opening (25, 57).

2. Arrangement according to claim 1, **characterized in that** a vibration drive (23, 58) is provided, by means of which the base (4, 33) can be set in vibration.

3. Arrangement according to claim 1, **characterized in that** the top (5) is designed as a turntable and a drive (22) is provided, by means of which the top (5) can be moved from the first position into the second position.

4. Arrangement according to claim 1, **characterized in that** a drive (53) is provided, by means of which the top (34) can be moved above the base (33) from the first position into the second position via a rail system (54).

5. Method for dedusting small-volume bulk materials from the arrangement according to claims 1 to 4, **characterized in that** the dedusting system of the arrangement performs the following successive steps:
5.1 The movable top is brought into the first position by rotation
5.2 bulk material is introduced into the chamber of the movable top via the charging opening, wherein the bulk material arrives on the first section of the bottom and the dust falls through the openings of the bottom
5.3 the chamber of the movable top is brought into the second position by rotation of the movable top, so that the chamber is arranged above the discharge opening, wherein the bulk material leaves the dust extractor via this discharge opening.

6. Method according to claim 5, **characterized in that** the floor is vibrated by means of the vibration drive during the step 5.2.

## Revendications

1. Agencement (1, 32) pour un appareil de test (3, 31) pour des produits en vrac de petit volume (9 à 12, 42 à 44, 61 à 64) et une installation de dépoussiérage (2, 30), dans lequel l'installation de dépoussiérage (2, 30) est fixée sur l'appareil de test et l'installation de dépoussiérage (2, 30) comporte :
- un fond (4, 33) qui présente, dans une première section (8, 45), plusieurs ouvertures (13 à 16, 46 à 48) ayant une fonction de tamisage, la poussière (50) pouvant être évacuée par ces ouvertures (13 à 16, 46 à 48) de l'installation de dépoussiérage (2, 30) et les produits en vrac (9 à 12, 42 à 44, 61 à 64) restant sur le fond (4, 33), le fond (4, 33) présentant une deuxième section (24, 56) dans laquelle est prévue une ouverture de déchargement (25, 57) par laquelle les produits en vrac (9 à 12, 42 à 44, 61 à 64) peuvent être déchargés de l'installation de dépoussiérage (2, 30) et amenés à l'appareil de test (3, 31),
- un chapeau (5, 34) disposé de manière mobile au-dessus du fond (4, 33), le chapeau (5, 34) présentant une chambre (7, 40) ouverte vers le bas, de sorte qu'une partie du fond (4, 33) forme le fond de la chambre (7, 40), et la chambre (7, 40) présentant une ouverture de chargement (19, 60) par laquelle les produits en vrac (9 à 12, 42 à 44, 61 à 64) peuvent être introduits dans la chambre (7, 40),
dans une première position, la chambre (7, 40) du chapeau (5, 34) étant disposée au-dessus des ouvertures (13 à 16, 46 à 48) ayant une fonction de tamisage et
dans une deuxième position, la chambre (7, 40) du chapeau (5, 34) étant disposée au-dessus de l'ouverture de déchargement (25, 57).

2. Agencement selon la revendication 1, **caractérisé en ce qu'il** est prévu un entraînement vibratoire (23, 58) par lequel le fond (4, 33) peut être mis en vibration.

3. Agencement selon la revendication 1, **caractérisé en ce que** le chapeau (5) est réalisé sous forme d'un plateau tournant et **en ce qu'**un entraînement (22) est prévu par lequel le chapeau (5) peut être déplacé de la première position à la deuxième position.

4. Agencement selon la revendication 1, **caractérisé en ce qu'il** est prévu un entraînement (53) par lequel le chapeau (34) peut être déplacée au-dessus du fond (33) de la première position à la deuxième position par un système de rails (54).

5. Procédé pour éliminer la poussière de produits en vrac de petit volume de l'agencement selon les revendications 1 à 4, **caractérisé en ce que** l'installation de dépoussiérage de l'agencement effectue les étapes successives suivantes :
5.1 Le chapeau mobile est amené dans la première position par rotation
5.2 des produits en vrac sont introduits dans la chambre du chapeau mobile par l'intermédiaire de l'ouverture de chargement, les produits en vrac arrive sur la première section du fond, la poussière tombe à travers les ouvertures du fond
5.3 la chambre du chapeau mobile est amenée dans la deuxième position par rotation du chapeau mobile, de sorte que la chambre est disposée au-dessus de l'ouverture de déchargement, le produit en vrac quitte l'installation de dépoussiérage par cette ouverture de déchargement.

6. Procédé selon la revendication 5, **caractérisé en ce que** le fond est mis en vibration par l'entraînement vibratoire pendant l'étape 5.2.
